# EUROPEAN PATENT APPLICATION

(11) **EP 4 360 855 A1**
(43) Date of publication of application: **01.05.2024**
(21) Application number: 22828529.2
(22) Date of filing: 24.06.2022
(51) Int. Cl.: B29C 65/48, C09J 5/06, C09J 163/00, C09J 171/12

(54) **METHOD FOR MANUFACTURING BONDED BODY**

(30) Priority: 24.06.2021 JP 2021105019
(71) Applicant: Resonac Corporation, Tokyo (JP)
(72) Inventor: TAKAHASHI, Nobuyuki, Tokyo 105-8518 (JP); KUROKI, Kunihiro, Tokyo 105-8518 (JP); SAITO, Hayato, Tokyo 105-8518 (JP)
(74) Representative: Strehl Schübel-Hopf & Partner
(86) International application number: PCT/JP2022/025232
(87) International publication number: WO 2022/270613

(57) **Abstract**

Provided is a method for producing a joined body, including a pre-joining step in which a base material A, a solid joining agent containing an amorphous thermoplastic resin, which is at least one of a thermoplastic epoxy resin and a phenoxy resin, as a main component, and a base material B are disposed in this order to prepare a laminated body, and a joining step in which the solid joining agent is melted by heating and pressurizing the laminated body to join the base material A and the base material B, in which an epoxy equivalent of the amorphous thermoplastic resin is 1,600 or more, or the amorphous thermoplastic resin does not contain an epoxy group, and a heat of fusion of the amorphous thermoplastic resin is 15 J/g or less.

## Description

### Technical Field

The present invention relates to a method for producing a joined body which is suitable for applications in which different kinds of materials are easily and firmly joined.

### Background Art

In recent years, multi-materialization of parts in various fields, such as automobile parts, medical equipment, and home appliances, has been progressing from the viewpoint of weight reduction and high capability of products. The multi-materialization is a method of reducing the weight of a material and increasing the strength of the material by using materials (hereinafter, referred to as different kinds of materials) having different functions and materials in combination. In order to realize the multi-materialization, a technique for firmly joining the different kinds of materials is indispensable.

As a means for firmly joining the different kinds of materials, a thermosetting epoxy resin-based adhesive (PTL 1 and the like) which is a liquid type adhesive is widely used.

Joining using a liquid type adhesive requires an application step of applying a liquid resin composition and a curing step of polymerizing and curing the resin composition after the application.

Therefore, when the joining is performed using the liquid type adhesive, there is a problem that it takes a long time to coat the resin composition in the coating step, and it takes a long time for the polymerization reaction in the curing step (that is, the joining process takes a long time), resulting in a lack of convenience.

In the description herein, the joining process time means a time from a start point to an end point with a contact time between at least one of base materials and a joining agent or an adhesive constituting a joined body as the start point and a completion time of the production of the joined body as the end point. For example, the joining process time corresponds to a time required for a step of applying a liquid adhesive to a base material and a drying step, a time required for a step of placing a solid joining agent, and a time required for joining the base materials (for example, curing a bonding layer).

A technique has also been disclosed in which a thermosetting epoxy resin composition is impregnated or coated on a base material and then semi-cured to form a laminated body having an adhesive layer made of a thermosetting epoxy resin-based adhesive in a semi-cured state (hereinafter referred to as a B-stage-shaped), and the laminated body is used for producing a joined body (PTL 2 and the like).

However, also in the case of using a laminated body having a B-stage-shaped adhesive layer, a curing step of curing the B-stage-shaped adhesive layer by polymerization reaction is required, and there is a problem that the joining process time is long.

In addition, the B-stage-shaped adhesive layer has problems that the storage stability is poor, the long-term storage at ordinary temperature is not possible, the storage at a low temperature is required, the open time is short, and the convenience is lacking.

In the description herein, the open time means a limited time from when a joining agent or an adhesive is applied or placed on a base material A to when a base material B is completely placed on the base material A. Within the open time, the bonding force of the joining agent or the adhesive is not reduced, and the base material A and the base material B can be bonded to each other with a sufficient bonding force. The longer the open time is, the longer the time limit from the application or placement of the joining agent or the adhesive on the base material A to the completion of the placement of the base material B becomes, which is highly convenient.

As a means for joining different kinds of materials, a hot-melt adhesive which is a thermoplastic adhesive is also used (PTL 3 and the like). The hot-melt adhesive is solid at ordinary temperature, and is liquefied by being heated and melted. The liquefied hot-melt adhesive is applied to an adherend, and joining is formed by cooling and solidification. Since the hot-melt adhesive performs bonding by utilizing a phase change that does not involve a polymerization reaction, an application step is unnecessary, the curing time is short (that is, the joining process time is short), and the convenience is excellent. Further, the hot-melt adhesive can be stored at ordinary temperature for a long period of time, and is excellent in convenience in that the open time is long.

However, since the conventional hot-melt adhesive is composed of a crystalline resin or a resin containing a crystalline resin in order to lower the melt viscosity, the cohesive force in the adhesive resin is high, and the hot-melt adhesive cannot have a sufficient interaction with the base material. In addition, during melting and bonding, the viscosity becomes low at high temperatures, and it is easy to flow out from the bonding surface, and the film thickness is not stable because it is difficult to control the viscosity. Due to these factors, there is a problem that a high bonding force cannot be stably obtained with a conventional hot-melt adhesive.

### Citation List

### Patent Literature

PTL 1: JP 2019-157018 A
PTL 2: JP 10-17685 A
PTL 3: JP 10-168417 A

### Summary of Invention

### Technical Problem

As described above, among the conventional techniques, the thermosetting epoxy resin-based adhesive having excellent bonding property has at least one of the problems of a long joining process time and a short open time in both the liquid type and the B-stage shape, and the hot-melt adhesive having a short joining process time and a long open time has the problem that a high bonding force cannot be stably obtained.

The present invention has been made in view of such a technical background, and it is an object of the present invention to provide a joining technique having a short joining process time, a long open time, and excellent bonding property.

### Solution to Problem

In order to achieve the above object, the present invention provides the following means.

In the description herein, the term "joining" means coupling materials together, and bonding and welding are narrower concepts thereof. The term "bonding" means that two adherends (to be bonded) are joined to each other through an organic material (such as a thermosetting resin or a thermoplastic resin) such as a tape or an adhesive. The term "welding" means that a surface of a thermoplastic resin or the like is melted by heat, and joining is performed by utilizing entanglement and crystallization due to molecular diffusion generated in a process of performing contact pressurization and cooling, or an intermolecular interaction with a base material generated at the time of melting.

### <Production Method of Joined Body>

[1] A method for producing a joined body, including: a pre-j oining step in which a base material A, a solid joining agent containing an amorphous thermoplastic resin, which is at least one of a thermoplastic epoxy resin and a phenoxy resin, as a main component, and a base material B are disposed in this order to prepare a laminated body; and a joining step in which the solid joining agent is melted by heating and pressurizing the laminated body to join the base material A and the base material B, in which an epoxy equivalent of the amorphous thermoplastic resin is 1,600 or more, or the amorphous thermoplastic resin does not contain an epoxy group, and a heat of fusion of the amorphous thermoplastic resin is 15 J/g or less.
[2] The method for producing a joined body according to [1], in which the heating and pressurizing are performed under conditions of 100°C to 400°C and 0.01 to 20 MPa.
[3] The method for producing a joined body according to [1] or [2], in which the solid joining agent before melting has any shape selected from the group consisting of a film, a rod, a pellet, and a powder.
[4] The method for producing a joined body according to any one of [1] to [3], in which the base material A is made of at least one of a resin and a metal, and the base material B is made of at least one of a resin and a metal.

### <Joined Body>

[5] A joined body obtained by joining a base material A and a base material B via a bonding layer, in which the bonding layer is formed by disposing a solid joining agent containing an amorphous thermoplastic resin, which is at least one of a thermoplastic epoxy resin and a phenoxy resin, as a main component between the base material A and the base material B, melting the solid joining agent by heating and pressurizing, and solidifying the solid joining agent, in which an epoxy equivalent of the amorphous thermoplastic resin is 1,600 or more, or the amorphous thermoplastic resin does not contain an epoxy group, and a heat of fusion of the amorphous thermoplastic resin is 15 J/g or less.
[6] The joined body according to [5], in which the heating and pressurizing are performed under conditions of 100°C to 400°C and 0.01 to 20 MPa.
[7] The joined body according to [5] or [6], in which the base material A is made of at least one of a resin and a metal, and the base material B is made of at least one of a resin and a metal.

### Advantageous Effects of Invention

According to the present invention, it is possible to provide a joining technique having a short joining process time, a long open time, and excellent bonding property.

### Brief Description of Drawings

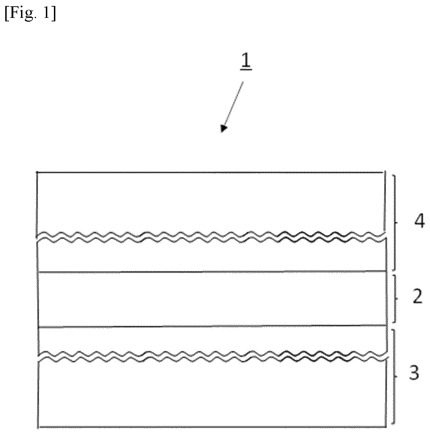

Fig. 1 is an illustrative view illustrating a configuration of a joined body in an embodiment of the present invention.

### Description of Embodiments

### [Production Method of Joined Body]

The method for producing a joined body of the present invention will be described in detail. In the following description, the description of "a to b" indicating a numerical range indicates a numerical range including a and b which are end points. That is, it means "a or more and b or less" (when a < b), or "a or less and b or more" (when a > b).

The method for producing a joined body includes a pre-joining step in which a base material A, a solid joining agent containing an amorphous thermoplastic resin, which is at least one of a thermoplastic epoxy resin and a phenoxy resin, as a main component, and a base material B are disposed in this order to prepare a laminated body, and a joining step in which the solid joining agent is melted by heating and pressurizing the laminated body to join the base material A and the base material B.

In the pre-joining step, neither the joining between the base material A and the solid joining agent nor the joining between the base material B and the solid joining agent is performed, and the joining is performed in the next joining step. The solid joining agent may have tackiness. When the solid joining agent has tackiness, the solid joining agent is temporarily fixed to the base material in the pre-joining step.

Hereinafter, each step will be described.

### <Pre-Joining Step>

In the pre-joining step, a base material A, a solid joining agent containing an amorphous thermoplastic resin, which is at least one of a thermoplastic epoxy resin and a phenoxy resin, as a main component, and a base material B are disposed in this order to prepare a laminated body.

In the laminated body, neither the base material A and the solid joining agent nor the solid joining agent and the base material B are joined to each other, and independent members are superposed on each other.

The term "solid" of the solid joining agent means that it is solid at ordinary temperature, that is, it has no fluidity in a state where it is not pressurized at 23°C.

It is desirable that the solid joining agent can maintain its outer shape without being deformed for 30 days or longer in a state where it is not pressurized at 23°C, and further has characteristics that it does not deteriorate.

The term "main component" means a component having the highest content among the resin components in the solid joining agent and having a content of 50% by mass or more in the resin components in the solid joining agent. The solid joining agent preferably contains 50% by mass or more of the resin component, more preferably 70% by mass or more, still more preferably 80% by mass or more, and particularly preferably 90% by mass or more.

### (Solid Joining Agent)

The solid joining agent contains, as a main component, an amorphous thermoplastic resin which is at least one of a thermoplastic epoxy resin and a phenoxy resin, an epoxy equivalent of the amorphous thermoplastic resin is 1,600 or more, or the amorphous thermoplastic resin does not contain an epoxy group, and a heat of fusion of the amorphous thermoplastic resin is 15 J/g or less.

The amorphous resin in the present invention is a resin which has a melting point (Tm) but does not have a clear endothermic peak associated with melting or has a very small endothermic peak in measurement using a differential scanning calorimeter (DSC). The heat of fusion is calculated from the area of the endothermic peak of DSC and the weight of the thermoplastic resin component. When an inorganic filler or the like is contained in the solid joining agent, the heat of fusion is calculated from the weight of the resin component excluding the inorganic filler. Specifically, the amorphous thermoplastic resin in the present invention refers to the following. A sample is weighed in an amount of 2 to 10 mg, placed in an aluminum pan, and heated from 23°C to 200°C at a rate of 10°C/min by DSC (DSC8231, manufactured by Rigaku Corporation) to obtain a DSC curve. Then, when the heat of fusion is calculated from the area of the endothermic peak at the time of melting obtained from the DSC curve and the weighed value, the resin has a heat of fusion of 15 J/g or less.

From the viewpoint of sufficiently imparting the characteristics of the amorphous thermoplastic resin to the solid joining agent, the content of the amorphous thermoplastic resin is preferably 60% by mass or more, more preferably 70% by mass or more, still more preferably 80% by mass or more, and most preferably 90% by mass or more of the resin components in the solid joining agent.

The heat of fusion is 15 J/g or less, preferably 11 J/g or less, more preferably 7 J/g or less, and still more preferably 4 J/g or less, and the endothermic peak at the time of melting is most preferably equal to or less than the detection limit.

The epoxy equivalent is 1,600 or more, preferably 2,000 or more, more preferably 5,000 or more, and still more preferably 9,000 or more, and it is most preferable that the epoxy equivalent is above the detection limit and the epoxy group is not substantially detected.

A solid joining agent which contains an amorphous thermoplastic resin, which is at least one of a thermoplastic epoxy resin and a phenoxy resin, as a main component, in which the amorphous thermoplastic resin has an epoxy equivalent of 1,600 or more, or the amorphous thermoplastic resin does not contain an epoxy group, and the amorphous thermoplastic resin has a heat of fusion of 15 J/g or less, does not rapidly decrease in viscosity during heating as seen in conventional hot-melt adhesives, and does not reach a state of low viscosity (0.001 to 100 Pa s) even in a high-temperature region exceeding 200°C. Therefore, the solid joining agent does not flow out even in a molten state, the thickness of the bonding layer can be stably ensured, and a high bonding force can be stably obtained.

The epoxy equivalent (the weight of the resin containing 1 mol of epoxy group) referred to herein is a value of the epoxy equivalent of the thermoplastic epoxy resin or phenoxy resin component contained in the solid joining agent before joining, and is a value (unit "g/eq ") measured by a method specified in JIS K 7236:2001. Specifically, a potentiometric titrator is used, cyclohexanone is used as a solvent, a brominated tetraethylammonium acetic acid solution is added, a 0.1 mol/L perchloric acid-acetic acid solution is used, and a numerical value as a solid content conversion value from non-volatile matter is calculated for a solvent diluted product (resin varnish). In the case of a mixture of two or more kinds of resins, it is also possible to calculate from the content of each resin and the epoxy equivalent.

The melting point of the amorphous thermoplastic resin which is the main component of the solid joining agent is preferably 50°C to 400°C, more preferably 60°C to 350°C, and still more preferably 70°C to 300°C. When the melting point is in the range of 50°C to 400°C, the solid joining agent is efficiently deformed and melted by heating and effectively wets and spreads on the bonding surface, so that high bonding force can be obtained.

In the description herein, the melting point of the amorphous thermoplastic resin means a temperature range of a process in which the amorphous thermoplastic resin substantially softens from a solid state and acquires a thermoplastic property, and melting and bonding become possible.

The conventional heat-curable adhesive has problems that it is difficult to disassemble the joined body, it is difficult to separate and recycle different kinds of materials constituting the joined body (i.e., poor in recycling property), and it is difficult to reattach the joined body when the joining portion is displaced in the production process of the joined body or when the contents or the adherend has a defect and needs to be replaced (i.e., poor in repairing property), thus lacking convenience. However, the solid joining agent can be softened and melted by heat and can be easily peeled off, so it has excellent recycling property. In addition, since the solid joining agent is thermoplastic, it can be reversibly softened, melted, and cured repeatedly, and is also excellent in repairing property.

### «Thermoplastic Epoxy Resin»

The thermoplastic epoxy resin is preferably a polymer of (a) a bifunctional epoxy resin monomer or oligomer and (b) a bifunctional compound having two identical or different functional groups selected from the group consisting of a phenolic hydroxy group, a carboxy group, a mercapto group, an isocyanate group, and a cyanate ester group.

By using such a compound, the polymerization reaction for forming a linear polymer preferentially proceeds, and a thermoplastic epoxy resin having desired properties can be obtained.

The bifunctional epoxy resin monomer or oligomer (a) refers to an epoxy resin monomer or oligomer having two epoxy groups in the molecules.

Specific examples of (a) include, for example, bisphenol A type epoxy resins, bisphenol F type epoxy resins, difunctional phenol novolac type epoxy resins, bisphenol AD type epoxy resins, biphenyl type epoxy resins, difunctional naphthalene type epoxy resins, difunctional alicyclic epoxy resins, difunctional glycidyl ester type epoxy resins (e.g., diglycidyl phthalate, diglycidyl tetrahydrophthalate, dimer acid diglycidyl ester, etc.), difunctional glycidyl amine type epoxy resins (e.g., diglycidyl aniline, diglycidyl toluidine, etc.), difunctional heterocyclic epoxy resins, difunctional diaryl sulfone type epoxy resins, hydroquinone type epoxy resins (e.g., hydroquinone diglycidyl ether, 2,5-di-tert-butylhydroquinone diglycidyl ether, resorcin diglycidyl ether, etc.), difunctional alkylene glycidyl ether-based compounds (e.g., butanediol diglycidyl ether, butenediol diglycidyl ether, butynediol diglycidyl ether, etc.), difunctional glycidyl group-containing hydantoin compounds (e.g., 1,3-diglycidyl-5,5-dialkylhydantoin, 1-glycidyl-3-(glycidoxyalkyl)-5,5-dialkylhydantoin, etc.), difunctional glycidyl group-containing siloxanes (e.g., 1,3-bis(3-glycidoxypropyl)-1,1,3,3-tetramethyldisiloxane, α,β-bis(3-glycidoxypropyl)polydimethylsiloxane, etc.), and modified products thereof. Among these, a bisphenol A type epoxy resin, a bisphenol F type epoxy resin, and a biphenyl type epoxy resin are preferable from the viewpoint of reactivity and workability.

Examples of the bifunctional compound having a phenolic hydroxy group (b) include mononuclear aromatic dihydroxy compounds having one benzene ring such as catechol, resorcin, and hydroquinone; bisphenols such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring such as dihydroxynaphthalene; bifunctional phenol compounds having an allyl group introduced therein, such as diallylresorcin, diallylbisphenol A, and triallyldihydroxybiphenyl; and dibutylbisphenol A.

Specific examples of the carboxyl group-containing compound (b) include adipic acid, succinic acid, malonic acid, cyclohexanedicarboxylic acid, phthalic acid, isophthalic acid, and terephthalic acid.

Examples of the bifunctional compound having a mercapto group (b) include ethylene glycol bisthioglycolate and ethylene glycol bisthiopropionate.

Specific examples of the bifunctional compound having an isocyanate group (b) include diphenylmethane diisocyanate (MDI), isophorone diisocyanate (IPDI), hexamethylene diisocyanate (HMDI), and tolylene diisocyanate (TDI).

Specific examples of the bifunctional compound having a cyanate ester group (b) include 2,2-bis(4-cyanatophenyl)propane, 1,1-bis(4-cyanatophenyl)ethane, and bis(4-cyanatophenyl)methane.

Among the above (b), a bifunctional compound having a phenolic hydroxy group is preferred from the viewpoint of obtaining a polymer having thermoplasticity, a bifunctional compound having two phenolic hydroxy groups and having a bisphenol structure or a biphenyl structure is preferred from the viewpoint of heat resistance and bonding property, and bisphenol A, bisphenol F or bisphenol S is preferred from the viewpoint of heat resistance and cost.

When (a) is a bisphenol A type epoxy resin, a bisphenol F type epoxy resin, a bisphenol S type epoxy resin, or a biphenyl type epoxy resin and (b) is bisphenol A, bisphenol F, or bisphenol S, the polymer obtained by polymerization of (a) and (b) has a structure in which a paraphenylene structure and an ether bond are used as a main skeleton, a main chain formed by connecting them with an alkylene group, and a hydroxy group generated by polyaddition are arranged in a side chain.

The linear structure composed of the paraphenylene skeleton can increase the mechanical strength of the polymer after polymerization, and the arranged hydroxy group in the side chain can improve the adhesion to the base materials. As a result, high bonding strength can be realized while maintaining the workability of the thermosetting resin. Further, in the case of a thermoplastic resin, the resin can be recycled and repaired by softening and melting the resin by heat, and the recycling property and the repairing property which are problems in a thermosetting resin can be improved.

### <<Phenoxy Resin>>

The phenoxy resin is a polyhydroxy polyether synthesized from bisphenols and epichlorohydrin, and has thermoplasticity. For the production of the phenoxy resin, a method by a direct reaction of a dihydric phenol and epichlorohydrin, and a method by an addition polymerization reaction of a diglycidyl ether of a dihydric phenol and a dihydric phenol are known, and the phenoxy resin used in the present invention may be obtained by any production method. In the case of the direct reaction between a dihydric phenol and epichlorohydrin, examples of the dihydric phenol include phenols such as bisphenol A, bisphenol F, bisphenol S, biphenol, biphenylene diol, and fluorene diphenyl; and aliphatic glycols such as ethylene glycol, propylene glycol, and diethylene glycol. Among them, bisphenol A, bisphenol F, and bisphenol S are preferable from the viewpoints of cost, bonding property, viscosity, and heat resistance. One kind thereof may be used singly, or two or more kinds thereof may be used in combination.

The phenoxy resin has a chemical structure similar to that of an epoxy resin and has a structure in which a para-phenylene structure and an ether bond are used as a main skeleton, a main chain connecting them, and a hydroxy group is disposed in a side chain.

### «Thermoplastic Epoxy Resin and Phenoxy Resin»

The thermoplastic epoxy resin and phenoxy resin preferably have a weight average molecular weight of 10,000 to 500,000, more preferably 18,000 to 300,000, and still more preferably 20,000 to 200,000, which is a value in terms of polystyrene as measured by gel permeation chromatography (GPC). The weight average molecular weight is calculated from an elution peak position detected by GPC, and is a value of a molecular weight in terms of standard polystyrene. When the weight average molecular weight is in the range of this value, the balance between the thermoplasticity and the heat resistance is good, the joined body is efficiently obtained by melting, and the heat resistance thereof is increased. When the weight average molecular weight is 10,000 or more, the heat resistance is excellent, and when it is 500,000 or less, the viscosity at the time of melting is low, and the bonding property is increased.

### <<Production Method of Solid Joined Body>>

The method for producing the solid joining agent is not particularly limited, and for example, the solid joining agent can be obtained by heating and polymerizing a monomer or oligomer of a bifunctional epoxy compound. At the time of the polymerization a solvent may be added to reduce the viscosity and facilitate stirring. In the case of adding a solvent, it is necessary to remove the solvent, and a solid joining agent may be obtained by performing drying or polymerization or both on a release film or the like.

If necessary, other additives may be blended as long as the object of the present invention is not impaired. The blending amount of the additive with respect to the total amount of the amorphous thermoplastic resin is preferably 50% by volume or less, more preferably 30% by volume or less, still more preferably 20% by volume or less, and most preferably 10% by volume or less. The % by volume of the additive represents a volume ratio of the volume of the additive contained before the polymerization of the solid joining agent to the total volume of the amorphous thermoplastic resin, and the volume of the additive can be obtained by dividing the weight of the additive contained by the true specific gravity of the additive.

Examples of the additive include a viscosity modifier, an inorganic filler, an organic filler (resin powder), an antifoaming agent, a coupling agent such as a silane coupling agent, and a pigment, and one or more of these agents can be used in combination.

As the viscosity modifier, for example, a reactive diluent or the like can be used.

Examples of the inorganic filler include spherical fused silica, metal powder of metal such as iron, silica sand, talc, calcium carbonate, mica, acid clay, diatomaceous earth, kaolin, quartz, titanium oxide, silica, phenol resin microballoons, and glass balloons.

The solid joining agent thus obtained has a low or substantially no content of unreacted monomers and terminal epoxy groups, and therefore has excellent storage stability and can be stored at ordinary temperature for a long period of time.

The form of the solid joining agent is not particularly limited, but it preferably has any form selected from the group consisting of films, rods, pellets, and powders. In particular, at least one side of the outer shape is preferably 5 mm or less, more preferably 3 mm or less, still more preferably 1 mm or less, even more preferably 0.5 mm or less, and most preferably 0.3 mm or less. By sandwiching the solid joining agent having at least one side of the outer shape of 5 mm or less between the base material A and the base material B and applying heat and pressure, the solid joining agent is efficiently spread on the bonding surface, and high bonding force can be obtained.

The solid joining agent may have tackiness as long as the bonding force and the heat resistance thereof are not impaired. In this case, the solid joining agent is temporarily fixed to the base material in the laminated body preparation step.

### <Joining Step>

In the joining step, the laminated body is heated and pressurized to melt the solid joining agent, and then the temperature is lowered to solidify the solid joining agent, thereby joining the base material A and the base material B.

The heating temperature is preferably 100°C to 400°C, more preferably 120°C to 350°C, and still more preferably 150°C to 300°C. By heating to 100°C to 400°C, the solid joining agent is efficiently deformed and melted and effectively wets and spreads on the bonding surface, whereby a high bonding force is obtained.

The pressurization pressure is preferably 0.01 to 20 MPa, more preferably 0.1 to 10 MPa, and still more preferably 0.2 to 5 MPa. By pressurizing at 0.01 to 20 MPa, the solid joining agent is efficiently deformed and effectively wets and spreads on the bonding surface, whereby a high bonding force is obtained. In the case where at least one of the base materials A and B is a thermoplastic resin, the solid joining agent and the base material are made compatible by pressurizing at 0.01 to 20 MPa, whereby a strong bonding force can be obtained.

Since the thermoplastic epoxy resin and the phenoxy resin, which are the main components of the solid joining agent, have a low cohesive force in the resins and have a hydroxy group, they interact strongly with the base material, and can join different kinds of materials with a higher bonding force than conventional crystalline hot-melt adhesives.

The joining of the base material A and the base material B utilizes a phase change (solid to liquid to solid) of a solid joining agent and does not involve a chemical reaction, and thus the joining can be completed in a shorter time than that of a conventional thermosetting epoxy resin.

### [Joined Body]

Fig. 1 shows one embodiment of the joined body of the present invention. The joined body 1 shown in Fig. 1 is obtained by integrally joining a base material A 3 and a base material B 4 via a bonding layer 2 which is obtained by melting and then solidifying a solid joining agent containing, as a main component, an amorphous thermoplastic resin which is at least one of a thermoplastic epoxy resin and a phenoxy resin, in which an epoxy equivalent of the amorphous thermoplastic resin is 1,600 or more or the amorphous thermoplastic resin does not contain an epoxy group, and a heat of fusion of the amorphous thermoplastic resin is 15 J/g or less. The joined body of the present invention exhibits excellent joining strength even when it is a joined body of different kinds of materials. Since the joining strength is affected by many factors such as the thickness of the bonding layer, the molecular weight and chemical structure of the polymer constituting the adhesive, mechanical properties, and viscoelastic properties, in addition to the strength of the interfacial interaction acting between the bonding layer and the base material, the details of the mechanism by which the joined body of the present invention exhibits excellent joining strength are not clear, but it is presumed that the main factors are that the cohesive force in the amorphous thermoplastic resin constituting the bonding layer 2 is low, and that hydroxy groups exist in the resin to form chemical bonds and intermolecular forces such as hydrogen bonds and van der Waals forces at the interfaces between the bonding layer and the base material A and between the bonding layer and the base material B. However, in the above-mentioned joined body, the state or characteristic of the above-mentioned interface of the above-mentioned joined body is a very thin chemical structure at the nanometer level or less, which is difficult to analyze, and it is impossible or impractical in the present technology to express it so as to distinguish it from that not due to the use of a solid joining agent by specifying it.

The joined body of the present invention in which the bonding layer is made of a thermoplastic resin is excellent in recycling property and repairing property, and can be easily disassembled into the base material A and the base material B by heating the joined body.

Each of the base material A and the base material B is preferably at least one of a resin and a metal.

The metal is preferably at least one selected from the group consisting of aluminum, iron, copper, magnesium, and alloys thereof. From the viewpoints of the bonding force and the strength of the base material and the strength of the interfacial bonding force with the solid joining agent, at least one of an aluminum alloy and an iron alloy is particularly preferable because a strong joined body can be obtained.

The resin is preferably one selected from the group consisting of a thermoplastic resin, a thermosetting resin, and a fiber reinforced plastic (FRP), and is more preferably a thermoplastic resin from the viewpoint of bonding force, cost, and ease of molding.

The combination of the base material A and the base material B is not particularly limited.

The shapes of the base material A and the base material B are also not particularly limited.

A high bonding force may be obtained by subjecting the base material A and the base material B to a pretreatment suitable for each base material. A pretreatment for cleaning the surface of the base material or a pretreatment imparting irregularities on the surface is preferable as the pretreatment. Specifically, when the base material includes aluminum, glass, a ceramic, or iron, at least one kind selected from the group consisting of a degreasing treatment, an UV ozone treatment, a blasting treatment, a polishing treatment, a plasma treatment, and an etching treatment is preferable, and when the base material includes an FRP, a polypropylene, a polycarbonate, a polymethyl methacrylate, a polyetherimide, a polyamide, or a polybutylene terephthalate, at least one kind selected from the group consisting of a degreasing treatment, an UV ozone treatment, a blasting treatment, a polishing treatment, a plasma treatment, and a corona discharge treatment is preferable.

One kind of the pretreatment may be carried out alone, or two or more kinds thereof may be carried out. Known methods can be used as specific methods for these pretreatments.

### Examples

Next, specific examples of the present invention will be described, but the present invention is not particularly limited to these Examples. In the following Examples, the base material A and the base material B are collectively referred to as a joining base material.

### <Joining Base Material>

The following joining base materials were used.

### «PA6 (6-Nylon)»

Amilan CM3001G-30 manufactured by Toray Industries, Inc. was injection molded to obtain a test piece having a width of 10 mm, a length of 45 mm, and a thickness of 3 mm. The test piece was used without surface treatment.

In order to heat efficiently in ultrasonic welding, a linear protrusion having a cross section of an equilateral triangle and a height of 0.5 mm was formed at a position 2.5 mm from the end.

### «PBT (Polybutylene Terephthalate)»

20-1001 manufactured by SABIC was injection molded to obtain a test piece having a width of 18 m, a length of 45 mm, and a thickness of 1.5 mm. The test piece was used without surface treatment.

### «PC (Polycarbonate)»

121R manufactured by SABIC was injection molded to obtain a test piece having a width of 10 mm, a length of 45 mm, and a thickness of 3 mm. The test piece was used without surface treatment.

### <<Iron>>

The surface of SPCC-SD was subjected to blasting treatment to obtain a test piece having a width of 10 mm, a length of 45 mm, and a thickness of 2.3 mm.

### «Aluminum»

The surface of A6061-T6 was subjected to blasting treatment to obtain a test piece having a width of 10 mm, a length of 45 mm, and a thickness of 3 mm.

### <Weight Average Molecular Weight, Heat of Fusion, and Epoxy Equivalent of Thermoplastic Epoxy Resin and Phenoxy Resin>

The weight average molecular weight, the heat of fusion, and the epoxy equivalent of the solid joining agent were each determined as follows.

### (Weight Average Molecular Weight)

Thermoplastic epoxy resins and phenoxy resins were dissolved in tetrahydrofuran and measured under the following conditions using Prominence 501 (manufactured by SHOWA SCIENCE CO., LTD., Detector: Shodex (registered trademark) R1-501 (manufactured by Showa Denko K.K.)).
Column: two columns LF-804 manufactured by Showa Denko K.K.
Column temperature: 40°C
Sample: 0.4% by mass tetrahydrofuran solution of resin
Flow rate: 1 mL/minute
Eluting solution: tetrahydrofuran
Calibration method: standard polystyrene equivalent

### (Heat of Fusion)

A thermoplastic epoxy resin and a phenoxy resin were weighed in an amount of 2 to 10 mg, placed in an aluminum pan, and heated from 23°C to 200°C at a rate of 10°C/min using a DSC (DSC8231, manufactured by Rigaku Corporation) to obtain a DSC curve. The heat of fusion was calculated from the area of the endothermic peak at the time of melting in the DSC curve and the weighed value.

### (Epoxy Equivalent)

The epoxy equivalent was measured in accordance with JIS K 7236:2001 and converted into a value as a resin solid content. In the case of a simple mixture that does not involve a reaction, the epoxy equivalent was calculated from each epoxy equivalent and content.

### <Example 1>

### (Solid Joining Agent P-1)

Into a reaction device equipped with a stirrer, a reflux condenser, a gas introduction tube, and a thermometer, were put 1.0 equivalent (203 g) of jER (registered trademark) 1007 (manufactured by Mitsubishi Chemical Corporation, bisphenol A-type epoxy resin, weight average molecular weight: about 10,000), 1.0 equivalent (12.5 g) of bisphenol S, 2.4 g of triphenylphosphine, and 1,000 g of methyl ethyl ketone, and the temperature was increased to 100°C while stirring in a nitrogen atmosphere. Completion of dissolution was visually confirmed, and a resin composition with a solid content of about 20% by mass was obtained after cooling to 40°C. The solvent was removed, and the resin composition was heated at 160°C for 2 hours to obtain a film-shaped solid joining agent (P-1) having a solid content of 100% by mass and a thickness of 100 µm. The weight average molecular weight was about 37,000. The epoxy equivalent was above the detection limit. No endothermic peak at the time of melting was detected in DSC.

### (Joined Body)

The following three types of joined bodies were produced.

Further, for the open time evaluation, a joined body for open time evaluation was also produced in the same manner as in the following «Metal/Metal» except that the solid joining agent was disposed on the aluminum base material (base material A) and then allowed to stand for 3 days, and then the PC base material (base material B) was placed.

### <<Resin/Resin>>

The solid joining agent P-1 cut to a size of 10 × 15 mm was disposed on the PBT base material as the base material A, and promptly thereafter, the PA6 base material as the base material B was disposed thereon so that the triangular protrusion was placed thereon. The base materials were overlapped with each other with a width of 10 mm and a depth of 5 mm. The solid joining agent P-1 was disposed so as to cover all the overlapped regions of the base materials. That is, a non-joined laminated body was prepared in a state in which the base material A and the base material B were not in direct contact with each other and the solid joining agent was interposed therebetween. In the description herein, "promptly thereafter" means within about 30 minutes.

Ultrasonic waves were applied using an ultrasonic welding machine (manufactured by Seidensha Electronics Co., Ltd., Oscillator JII930S, Press JIIP30S), and the test pieces were joined to each other by heating and pressurization. The amount of sinking was set to 0.6 mm, and the ultrasonic wave application time was set to 1 second or less (end even if the time was shorter than 1 second when the aforementioned sinking was completed). The subsequent retention time was 1 second. The pressurization force was 110 N (pressure: 2.2 MPa), and the oscillation frequency was 28.5 kHz.

### <<Resin/Metal>>

The solid joining agent P-1 cut to a size of 10 × 15 mm was disposed on the aluminum base material as the base material A, and promptly thereafter, the PC base material as the base material B was disposed thereon. The base materials were overlapped with each other with a width of 10 mm and a depth of 5 mm. The solid joining agent P-1 was disposed so as to cover all the overlapped regions of the base materials. That is, a non-joined laminated body was prepared in a state in which the base material A and the base material B were not in direct contact with each other and the solid joining agent was interposed therebetween.

The metals were heated by high-frequency induction using a high-frequency induction welding machine (manufactured by Seidensha Electronics Co., Ltd., oscillator UH-2.5K, press JIIP30S), and the test pieces were joined to each other by heating and pressurization. The pressurization force was set to 110 N (pressure: 2.2 MPa), the oscillating frequency was set to 900 kHz. The oscillating time was set to 6 seconds.

### <<Metal/Metal>>

The solid joining agent P-1 cut to a size of 10 × 15 mm was disposed on the aluminum base material as the base material A, and promptly thereafter, the iron base material as the base material B was disposed thereon. The base materials were overlapped with each other with a width of 10 mm and a depth of 5 mm. The solid joining agent P-1 was disposed so as to cover all the overlapped regions of the base materials. That is, a non-joined laminated body was prepared in a state in which the base material A and the base material B were not in direct contact with each other and the solid joining agent was interposed therebetween.

The metals were heated by high-frequency induction using a high-frequency induction welding machine (manufactured by Seidensha Electronics Co., Ltd., oscillator UH-2.5K, press JIIP30S), and the test pieces were joined to each other by heating and pressurization. The pressurization force was set to 110 N (pressure: 2.2 MPa), the oscillating frequency was set to 900 kHz. The oscillating time was set to 5 seconds.

### <Example 2>

### (Solid Joining Agent P-2)

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight average molecular weight: about 50,000) and 80 g of cyclohexanone were charged, the temperature was raised to 60°C while stirring, completion of dissolution was visually confirmed, and the temperature was cooled to 40°C, thereby obtaining a resin composition having a solid content of 20% by mass. The solvent was removed to obtain a film-shaped solid joining agent (P-2) having a solid content of 100% by mass and a thickness of 100 µm. The weight average molecular weight was 50,000, and the epoxy equivalent was above the detection limit. No heat of fusion peak was detected in DSC.

### (Joined Body)

Three types of joined bodies and a joined body for open time evaluation were produced in the same manner as in Example 1 except that P-2 was used as the solid joining agent.

### <Example 3>

### (Solid Joining Agent P-3)

The resin composition P-2 and a crystalline epoxy resin YSLV-80XY (manufactured by NIPPON STEEL Chemical & Material Co., Ltd.) were mixed at a mass ratio of 98:2 to obtain a solid joining agent (P-3). The weight average molecular weight was 36,000, the epoxy equivalent was 9600 g/eq, and the heat of fusion was 2 J/g.

### (Joined Body)

Three types of joined bodies and a joined body for open time evaluation were produced in the same manner as in Example 1 except that P-3 was used as the solid joining agent.

### <Example 4>

### (Solid Joining Agent P-4)

The resin composition P-2 and a crystalline epoxy resin YSLV-80XY (manufactured by NIPPON STEEL Chemical & Material Co., Ltd.) were mixed at a mass ratio of 94:6 to obtain a solid joining agent (P-4). The weight-average molecular weight was 35,000, the epoxy equivalent was 2100 g/eq, and the heat of fusion was 4 J/g.

### (Joined Body)

Three types of joined bodies and a joined body for open time evaluation were produced in the same manner as in Example 1 except that P-4 was used as the solid joining agent.

### <Example 5>

### (Solid Joining Agent P-5)

The resin composition P-2 and a crystalline epoxy resin YSLV-80XY (manufactured by NIPPON STEEL Chemical & Material Co., Ltd.) were mixed at a mass ratio of 89: 11 to obtain a solid joining agent (P-5). The weight average molecular weight was 33,000, the epoxy equivalent was 1700 g/eq, and the heat of fusion was 11 J/g.

### (Joined Body)

Three types of joined bodies and a joined body for open time evaluation were produced in the same manner as in Example 1 except that P-5 was used as the solid joining agent.

### <Example 6>

### (Solid Joining Agent P-6)

Into a reaction device equipped with a stirrer, a reflux condenser, a gas introduction tube, and a thermometer, were put 1.0 equivalent (203 g) of jER (registered trademark) 1007 (manufactured by Mitsubishi Chemical Corporation, bisphenol A-type epoxy resin, molecular weight: about 4060), 0.6 equivalents (12.5 g) of bisphenol S (molecular weight: 250), 2.4 g of triphenylphosphine, and 1,000 g of methyl ethyl ketone, and the temperature was increased to 100°C while stirring in a nitrogen atmosphere. Completion of dissolution was visually confirmed, and a resin composition with a solid content of about 20% by mass was obtained after cooling to 40°C. The solvent was removed, and the resin composition was heated at 160°C for 2 hours to obtain a film-shaped solid joining agent (P-6) having a solid content of 100% by mass and a thickness of 100 µm. The weight average molecular weight was about 30,000, and the epoxy equivalent was above the detection limit. No heat of fusion peak was detected in DSC.

### (Joined Body)

Three types of joined bodies and a joined body for open time evaluation were produced in the same manner as in Example 1 except that P-6 was used as the solid joining agent.

### <Comparative Example 1>

### (Solid Joining Agent Q-1)

Two liquids of a heat-curable liquid epoxy adhesive E-250 (manufactured by Konishi Co., Ltd., a two liquid type of a bisphenol-type epoxy and an amine curing agent) were mixed, applied to a release film, cured at 100°C for 1 hour, cooled, and peeled off from the release film to obtain a film-shaped solid joining agent (Q-1) having a thickness of 100 µm. No heat of fusion peak was detected in DSC. The epoxy equivalent and the weight average molecular weight could not be measured because the solid joining agent was insoluble in a solvent.

### (Joined Body)

Three types of joined bodies and a joined body for open time evaluation were produced in the same manner as in Example 1 except that Q-1 was used as the solid joining agent.

### <Comparative Example 2>

### (Solid Joining Agent Q-2)

An amorphous polycarbonate film (Iupilon (registered trademark) FE2000, manufactured by Mitsubishi Engineering-Plastics Corporation, thickness: 100 µm) was used as a solid joined body Q-2. No heat of fusion peak was detected in DSC.

### (Joined Body)

Three types of joined bodies and a joined body for open time evaluation were produced in the same manner as in Example 1 except that Q-2 was used as the solid joining agent.

### <Comparative Example 3>

### (Solid Joining Agent Q-3)

A crystalline epoxy resin YSLV-80XY (manufactured by NIPPON STEEL Chemical & Material Co., Ltd.) was used as a solid joining agent (Q-3). The epoxy equivalent was 192 g/eq. The weight average molecular weight was 340. The heat of fusion was 70 J/g.

### (Joined Body)

Three types of joined bodies and a joined body for open time evaluation were produced in the same manner as in Example 1 except that Q-3 was used as the solid joining agent.

### <Comparative Example 4>

### (Joined Body)

Two liquids of a heat-curable liquid epoxy adhesive E-250 (manufactured by Konishi Co., Ltd., a two liquid type of a bisphenol-type epoxy resin and an amine curing agent) were mixed, applied to three types of the base material A and the base material B respectively as in Example 1, bonded to each other within one minute, then allowed to stand in an oven at 100°C for one hour in a state of being fixed with a clip to cure the bonding components, and then cooled to room temperature to prepare three types of joined bodies.

Further, a joined body for open time evaluation was also produced in the same manner as described above, except that the heat-curable liquid epoxy adhesive E-250 was applied to the base material A and the base material B, allowed to stand for 3 days, and then bonded to each other.

### <Comparative Example 5>

A flask was charged with 1.0 equivalent (203 g) of jER (registered trademark) 1007 (manufactured by Mitsubishi Chemical Corporation, bisphenol A-type epoxy resin, weight average molecular weight: about 10000), 1 equivalent (12.5 g) of bisphenol S, 2.4 g of triphenylphosphine, and 1,000 g of methyl ethyl ketone, and the mixture was stirred at room temperature to obtain a liquid resin composition having a solid content of about 20% by mass. The liquid resin composition was bar coated on each of the three types of base materials B in the same manner as in Example 1, dried at room temperature for 30 minutes, and then left in an oven at 160°C for 2 hours to form a solid thermoplastic epoxy resin polymer coating layer having a thickness of 100 µm on the surface of the base material B. The weight average molecular weight of the coating layer was about 40,000. The epoxy equivalent was above the detection limit. No heat of fusion peak was detected in DSC.

### (Joined Body)

Three types of joined bodies were produced in the same manner as in Example 1 except that the base material A was directly disposed on the base material B having the coating layer.

In addition, for the open time evaluation, a joined body for open time evaluation was also produced in the same manner as described above except that a thermoplastic epoxy resin polymer coating layer was formed on the surface of the base material B, allowed to stand for 3 days, and then laminated with the base material A.

### <Comparative Example 6>

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight average molecular weight: about 50,000) and 80 g of cyclohexanone were charged, the temperature was raised to 60°C while stirring, dissolution was visually confirmed, and the temperature was cooled to 40°C, thereby obtaining a liquid resin composition having a solid content of 20% by mass. The liquid resin composition was bar coated on each of the three types of base materials B in the same manner as in Example 1, and left to stand in an oven at 70°C for 30 minutes to form a phenoxy resin coating layer having a thickness of 100 µm on the surface of the base material B. The weight average molecular weight of the coating layer was about 50,000. The epoxy equivalent was above the detection limit. No heat of fusion peak was detected in DSC.

### (Joined Body)

Three types of joined bodies were produced in the same manner as in Example 1 except that the base material A was directly disposed on the base material B having the phenoxy resin coating layer.

In addition, for the open time evaluation, a joined body for open time evaluation was also produced in the same manner as described above except that a phenoxy resin coating layer was formed on the surface of the base material B, allowed to stand for 3 days, and then laminated with the base material A.

### <Comparative Example 7>

### (Joined Body)

Three types of joined bodies and a joined body for open time evaluation were produced in the same manner as in Example 1 except that a crystalline polyamide-based hot-melt adhesive film NT-120 (manufactured by Nihon Matai Co., Ltd., thickness: 100 µm) was used as the solid joining agent. The heat of fusion was 60 J/g.

### [Shear Bonding Force)

The joined bodies obtained in Examples 1 to 6 and Comparative Examples 1 to 7 were allowed to stand at a measurement temperature (23°C or 80°C) for 30 minutes or more, and then a tensile shear bonding strength test was performed in 23°C and 80°C atmospheres using a tensile testing machine (universal testing machine Autograph "AG-X plus" (manufactured by Shimadzu Corporation); load cell 10 kN, tensile speed 10 mm/min) in accordance with ISO 19095 to measure the joining strength. Measurement results are shown in Table 1.

### [Joining Process Time]

The joining process time was measured as follows.

The joining process time was measured from a start point to an end point, with the contact time between at least one of the base materials constituting the joined body and the joining agent as the start point and the completion time of the production of the joined body as the end point. With respect to the heating and pressurizing time, the respective values of the three types of joined bodies were averaged.

### [Recycling Property]

The recycling property was judged by whether or not the aluminum and iron joined bodies of the joined bodies could be easily peeled off with a force of 1 N or less after being placed on a hot plate at 200°C and heated for 1 minute. If the joined body could be peeled off, it was evaluated as good (A), and if not, it was evaluated as poor (C).

### [Repairing Property]

The base material A was disposed on the base material B among the test pieces of aluminum and iron (the layer of the joining solid remained on the surfaces of the base material A and/or the base material B) whose bonding surfaces were broken after the tensile shear strength test at 23°C, and a joined body was produced in the same manner as in Example 1 to obtain a repair-joined body. The shear bonding force of the repair-joined body at 23°C was measured in the same manner as the above-mentioned test method, and it was evaluated as good (A) if the shear bonding force was 80% or more of the first shear bonding force, and it was evaluated as poor (C) if the shear bonding force was less than 80%.

### [Open Time Evaluation]

Using the joined body for open time evaluation, the tensile shear bonding strength test was performed at 23°C. When the shear bonding force was 80% or more as compared with the test pieces prepared by the methods of the above-described Examples and Comparative Examples, it was evaluated as good (A), and when it was less than 80%, it was evaluated as poor (C). When the open time evaluation is good (A), it means that the open time is long and the convenience is excellent.

**Table 1**

| | | | Example 1 | Example 2 | Example 3 | Example 4 | Example 5 | Example 6 |
|---|---|---|---|---|---|---|---|---|
| Properties of joining agent | Form of joining agent | | Film | Film | Film | Film | Film | Film |
| | Resin main component | | Thermoplastic epoxy resin | Phenoxy resin | Thermoplastic epoxy resin | Thermoplastic epoxy resin | Thermoplastic epoxy resin | Thermoplastic epoxy resin |
| | Weight average molecular weight | | 37000 | 50000 | 36000 | 35000 | 33000 | 30000 |
| | Heat of fusion [J/g] | | No melting peak | No melting peak | 2 | 4 | 11 | No melting peak |
| | Epoxy equivalent [g/eq.] | | Above detection limit | Above detection limit | 9600 | 2100 | 1745 | Above detection limit |
| Joining force | 23°C Shear bonding force [MPa] | Resin/Resin | 17 | 14 | 16 | 12 | 11 | 14 |
| | | Resin/Metal | 25 | 19 | 23 | 22 | 23 | 15 |
| | | Metal/Metal | 22 | 22 | 22 | 19 | 21 | 17 |
| | 80°C Shear bonding force [MPa] | Resin/Resin | 8 | 8 | 8 | 7 | 5 | 7 |
| | | Resin/Metal | 15 | 18 | 17 | 16 | 14 | 13 |
| | | Metal/Metal | 11 | 12 | 15 | 13 | 13 | 11 |
| Convenience | Joining process time | | 3.5 seconds | 3.5 seconds | 3.5 seconds | 3.5 seconds | 3.5 seconds | 3.5 seconds |
| | Recycling property | | A | A | A | A | A | A |
| | Repairing property | | A | A | A | A | A | A |
| | Open time evaluation | | A | A | A | A | A | A |

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Properties of joining agent | Form of joining agent | | Film | Film | Film | Liquid | Coating layer | Coating layer | Film |
| | Resin main component | | Thermosetting epoxy resin | Polycarbonate | Epoxy resin | Thermosetting epoxy resin | Thermosetting epoxy resin | Phenoxy resin | Polyamide |
| | Weight average molecular weight | | | | 340 | | 40000 | 50000 | |
| | Heat of fusion [J/g] | | No melting peak | No melting peak | 70 | No melting peak | No melting peak | No melting peak | 60 |
| | Epoxy equivalent [g/eq.] | | - | - | 192 | - | Above detection limit | Above detection limit | - |
| Joining force | 23°C Shear bonding force [MPa] | Resin/Resin | 9 | 11 | 5 | 1 | 15 | 17 | 11 |
| | | Resin/Metal | 1 | 3 | Base material deformation during heating | 3 | 43 | 21 | 1 |
| | | Metal/Metal | 0 | 1 | 2 | 3 | 4 | 5 | 6 |
| | 80°C Shear bonding force [MPa] | Resin/Resin | 6 | 7 | 5 | 4 | 9 | 9 | 5 |
| | | Resin/Metal | 1 | 3 | Base material deformation during heating | 1 | 21 | 20 | 5 |
| | | Metal/Metal | 0 | 1 | 2 | 3 | 4 | 5 | 6 |
| Convenience | Joining process time | | 3.5 seconds | 3.5 seconds | 3.5 seconds | 70 minutes | 150 minutes | 32 minutes | 3.5 seconds |
| | Recycling property | | C | A | A | A | A | A | A |
| | Repairing property | | C | A | A | C | A | A | A |
| | Open time evaluation | | C | A | A | C | A | A | A |

### Industrial Applicability

The joined body obtained by the production method of the present invention is used, for example, as automobile components, such as a door side panel, an engine hood roof, a tailgate, a steering hanger, an A pillar, a B pillar, a C pillar, a D pillar, a crush box, a power control unit (PCU) housing, an electric compressor component (such as an inner wall, an intake port, an exhaust control valve (ECV) insertion part, and a mount boss), a lithium ion battery (LIB) spacer, a battery case, and an LED head lamp, and as structural members of a smartphone, a notebook personal computer, a tablet personal computer, a smartwatch, a large size liquid crystal display television set (LCD-TV), and an outdoor LED illumination, but are not particularly limited to these exemplified applications.

### Reference Signs List

1: Joined body
2: Bonding layer
3: Base material A
4: Base material B

## Claims

1. A method for producing a joined body, comprising:
a pre-joining step wherein a base material A, a solid joining agent containing an amorphous thermoplastic resin, which is at least one of a thermoplastic epoxy resin and a phenoxy resin, as a main component, and a base material B are disposed in this order to prepare a laminated body; and
a joining step wherein the solid joining agent is melted by heating and pressurizing the laminated body to join the base material A and the base material B,
wherein an epoxy equivalent of the amorphous thermoplastic resin is 1,600 or more, or the amorphous thermoplastic resin does not contain an epoxy group, and a heat of fusion of the amorphous thermoplastic resin is 15 J/g or less.

2. The method for producing a joined body according to claim 1, wherein the heating and pressurizing are performed under conditions of 100°C to 400°C and 0.01 to 20 MPa.

3. The method for producing a joined body according to claim 1 or 2, wherein the solid joining agent before melting has any shape selected from the group consisting of a film, a rod, a pellet, and a powder.

4. The method for producing a joined body according to any one of claims 1 to 3, wherein the base material A is made of at least one of a resin and a metal, and the base material B is made of at least one of a resin and a metal.

5. A joined body obtained by joining a base material A and a base material B via a bonding layer, wherein the bonding layer is formed by disposing a solid joining agent containing an amorphous thermoplastic resin, which is at least one of a thermoplastic epoxy resin and a phenoxy resin, as a main component between the base material A and the base material B, melting the solid joining agent by heating and pressurizing, and solidifying the solid joining agent, wherein an epoxy equivalent of the amorphous thermoplastic resin is 1,600 or more, or the amorphous thermoplastic resin does not contain an epoxy group, and a heat of fusion of the amorphous thermoplastic resin is 15 J/g or less.

6. The joined body according to claim 5, wherein the heating and pressurizing are performed under conditions of 100°C to 400°C and 0.01 to 20 MPa.

7. The joined body according to claim 5 or 6, wherein the base material A is made of at least one of a resin and a metal, and the base material B is made of at least one of a resin and a metal.
